# EUROPEAN PATENT APPLICATION

(11) **EP 4 435 388 A1**
(43) Date of publication of application: **25.09.2024**
(21) Application number: 23218986.0
(22) Date of filing: 21.12.2023
(51) Int. Cl.: G01G 9/00, G01G 13/02, G01G 15/00

(54) **ELECTROMAGNETIC MEASURING DEVICE FOR MEASURING ONE OR MORE EXTENSIVE PROPERTIES OF A PRODUCT AND MEASURING METHOD THEREOF**

(30) Priority: 24.03.2023 IT 202300005631
(71) Applicant: G.D S.p.A., 40133 Bologna (IT)
(72) Inventor: TRIVISONNO, Eura, 40133 BOLOGNA (IT); FRASSON, Marco, 40133 BOLOGNA (IT); DIONIGI, Marco, 40133 BOLOGNA (IT)
(74) Representative: Persi, Patrizia

(57) **Abstract**

An electromagnetic measuring device is presented for measuring one or more extensive properties of a product comprising a body, which is hollow inside, having walls made of a conductive material and defining an internal cavity, configured to receive the product and a coupling component, configured to create an electromagnetic field in the internal cavity and to receive said electromagnetic field disturbed by the product inside the internal cavity. The body has a loading opening made in one of said walls. The measuring device further comprises a loading element and a movement device, the latter being capable of moving the loading element relative to the body and being configured to insert the loading element into the body through said loading opening from an external position, configured to receive the product, to an internal position, in which the product is in the internal cavity and it is positioned in a measuring position.

## Description

The present invention relates to an electromagnetic measuring device for measuring one or more extensive properties of a product and measuring method thereof.

In particular, the present invention relates to an electromagnetic measuring device for measuring an extensive property of a product, e.g. the weight, or the volume, but it is to know that, without restrictions of generality, the electromagnetic measuring device of the present invention can be advantageously used for measuring other extensive properties of the product, different from weight, or volume.

By extensive property of a product we mean a physical amount depending on the dimensions or amount of material of the product itself. In other words, the extensive property proportionately increases or decreases to the amount of material forming the product, or to the spatial extension thereof.

Automatic machines are known, which provide the transport of products and comprise a transport conveyor defining a transport path and a measuring station, e.g. a station for measuring the weight of the products, positioned along the transport path.

If the product is a container shaped to contain a flowing material, such as a liquid or powder, the automatic machine can comprise, in addition to the measuring station, a filling station positioned upstream of the measuring station along the transport path, toward which the empty containers are carried and filled with the predetermined amount of the flowing material. By knowing the weight of the empty containers and measuring the weight of each container filled in the measuring station, it is possible to determine the weight of the flowing material contained in each container.

For products of the pharmaceutical industry, the container can be a bottle, or a vial intended to be filled with a medicine in liquid format, or powder. For these products, it is important to have a particularly accurate dosing control of the filling flowing material, to ensure the efficacy of the pharmaceutical product, and the marketing of non-conforming products must be prevented, i.e. products, containing an insufficient or excessive amount of the filling product therein. To this end, each container filled with the flowing material is weighed individually and, downstream of the measuring station, the filled container is sealed and prepared for being placed on the market if the flowing material is of the predetermined weight or rejected if it not compliant.

Recently, single-use (i.e. disposable) cartridges have also been suggested for electronic cigarettes comprising a casing made of a tubular-shaped plastic material with a micro-perforated bottom wall, containing an amount of powdered tobacco.

The production of such cartridges provides filling each casing with a measured dose of powdered tobacco and slightly compressing the filling product inside the casing to obtain the desired density.

In this case, too, the cartridges are weighed separately to allow discarding the ones containing an insufficient or excessive amount of tobacco inside. Only the cartridges containing a predetermined weight of tobacco are capped and prepared to be placed on the market.

To increase accuracy of the flowing material dosing, there is provided, both for the pharmaceutical industry and for the tobacco industry, a first weight measurement by means of a first load cell in a first measuring station positioned upstream of the filling station, to weigh the empty container, and a second weight measurement by means of a further load cell in a second measuring station, downstream, or at the filling station, to measure the weight of the full container, filled with the flowing material, so as to obtain the weight of the flowing material by difference between the filled container and the empty container. In fact, by weighing each empty container, it is possible to consider any changes in the containers with respect to a predetermined nominal weight.

Each weight measurement by means of load cell results in a pause equal to the duration of the measurement and if the filling is quick, as the amount of the filling product is small, the duration of the filling is shorter than the duration of the weight measurement. In fact, this results in two pauses for each container, slowing down the cycle time of the automatic machine.

Electromagnetic microwave measuring devices are known, both for automatic machines in the pharmaceutical industry and for automatic machines in the tobacco industry, which are capable of measuring an extensive property of a product, e.g. the weight and/or the volume of the product. The use of an electromagnetic measuring device is advantageous because, with the same conditions, it is capable of measuring the extensive property more quickly than the same measurement taken by means of the loading cell.

Such electromagnetic measuring devices of the known type are directly constrained, as regards the shape and arrangement thereof, to the type of transport conveyor used and to the type of product, as they are positioned along the transport path.

For example, "C"-shaped microwave measuring devices are known, open on three sides and having an entrance at the side, which are configured to be crossed by the product, held vertically in a cantilever fashion over the transport conveyor, in such a way that only the product is received inside the measuring device, but not the transport conveyor, which could alter the measurement of the extensive property of the product.

In this case, transport of the product is particularly complex and not suitable for open containers containing flowing products.

Vice-versa, for the latter, the transport conveyor can opportunely be designed in such a way that both the open container, held vertically, and the transport conveyor, arranged for a horizontal movement, are received in the "C"-shaped microwave measuring device. Thereby, the container is always carried vertically and it is held firmly by the transport conveyor, also during transport through the microwave detector. However, a correction is needed in the measurement of the extensive property, to take into account the contemporary measurement both of the container, filled with the filling product, and of the transport conveyor.

In addition, measurement corrections may be necessary due to mutual interference in measuring adjacent products.

In this context, the technical task underlying the present invention is to suggest an electromagnetic measuring device for measuring one or more extensive properties of a product and a measuring method thereof, which overcomes the drawbacks of the aforesaid known art.

In particular, it is the object of the present invention to provide an electromagnetic measuring device and measuring method thereof, capable of ensuring the correct and efficient measuring of one or more extensive properties of a product in a simple and efficient manner.

It is a further object of the present invention to provide an electromagnetic measuring device and measuring method thereof, which reduces, to a maximum, the time needed to measure one or more extensive properties and which, at the same time, reduces the need to correct the measurement, due to the influence of elements other than the product, such as the transport conveyor, or the products adjacent to the product.

It is another object of the present invention to provide an electromagnetic measuring device and measuring method thereof, as an alternative to those currently known, which is particularly efficient at measuring one or more extensive properties and which allows obtaining a compact measuring device that is easy to produce.

It is a further object of the present invention, if the product is a container configured to contain a flowing filling material, to provide an electromagnetic measuring device and measuring method thereof, which is particularly effective at measuring one or more extensive properties of the flowing material and which reduces the dwell time needed for measuring such extensive property, or such extensive properties.

The technical task and the specified objects are substantially achieved by an electromagnetic measuring device and measuring method thereof comprising the technical features set forth in one or more of the appended claims.

The dependent claims, incorporated herein by reference, correspond to different embodiments of the invention.

Further features and advantages of the present invention will become more apparent from the following indicative and thus non-limiting description of a preferred, but not exclusive, embodiment of an electromagnetic measuring device, as shown in the accompanying drawings, in which:
- Figure 1 shows a perspective view of an electromagnetic measuring device for measuring one or more extensive properties of a product, according to the present invention, comprising a body, which is hollow inside, having walls defining an internal cavity, and a loading element, which is movable relative to the body, on which the product is placed, resting, wherein the loading element is in an internal position, in which the product is in a measuring position;
- Figure 2 is a perspective view of the measuring device in Figure 1, with parts removed for clarity, comprising a dielectric component for filling the internal cavity of the body, which is air;
- Figure 3 shows a perspective view of a variant of the electromagnetic measuring device in Figure 1, in which the loading element is in the internal position in which the product is in a measuring position, and in which the product is a container for containing flowing material, which is open at the top, a nozzle being received in a filling space inside the body and being inserted into the container for filling the container;
- Figure 4 is a perspective view of the measuring device in Figure 3, with parts removed for clarity;
- Figure 5 is a perspective view of another variant of the measuring device in Figure 1, comprising a dielectric component in the solid state for filling the internal cavity;
- Figure 6 is a perspective view of the measuring device in Figure 5, with parts removed for clarity;
- Figure 7 is a perspective view of a further variant of the measuring device in Figure 3, comprising a dielectric component in solid state for filling the internal cavity;
- Figure 8 is a perspective view of the measuring device in Figure 7, with parts removed for clarity;
- Figure 9 is a sectional view of the measuring device in Figure 7, in which the loading element is in an external position in which it has received the empty container and it is capable of being inserted through a loading opening, made in a wall of the body, in the internal cavity by virtue of a movement device of the measuring device;
- Figure 10 is a sectional view of the measuring device in Figure 7, in which the loading element has been moved by the movement device into the internal position, in which the container is in the measuring position and the container, after the insertion therein of the nozzle, is in a filling step;
- Figure 11 is a sectional view of the measuring device in Figure 7, in which the loading element is in the internal position, the filling step is complete and the container has been filled;
- Figure 12 is a sectional view of the measuring device in Figure 7, in which the loading element is removed from the internal position through the same loading opening after the filling step, and it is moved by the movement device from the internal position to the external position;
- Figure 13 is a sectional view of a variant of the measuring device in Figure 7, in which, in an inserting step preceding the filling step, the loading element has been moved by the movement device from the external position to an inserting position, to allow the empty container to be coupled with the nozzle, the loading element then being moved by the movement device into the internal position when the nozzle has been inserted into the container;
- Figure 14 is a sectional view of a version of the electromagnetic measuring device in Figure 7 and the movement device, in which the loading element is in the external position, in which it has received an empty container, the nozzle is received in the filling space and the movement device is configured to move the loading element horizontally into a loading space, which is perpendicular to the filling space;
- Figure 15 is a sectional view of the electromagnetic measuring device in Figure 14, at the end of the filling step, in which the loading element has been inserted into the body through the loading opening and it is in the internal position, in which the container is in the measuring position, and the nozzle has finished filling the container with the flowing material.
- Figure 16 is a view from above of the measuring device in Figure 1, in use, in which an electromagnetic field created by a coupling component, oriented and positioned in at least one of the walls of the body, has an electric field distribution lying in a plane perpendicular to a longitudinal axis of the loading space, and in which the maximum intensity of the electric field is in a position other than the measuring position.

Hereinafter, the same elements will be indicated in the various figures with the same reference numerals.

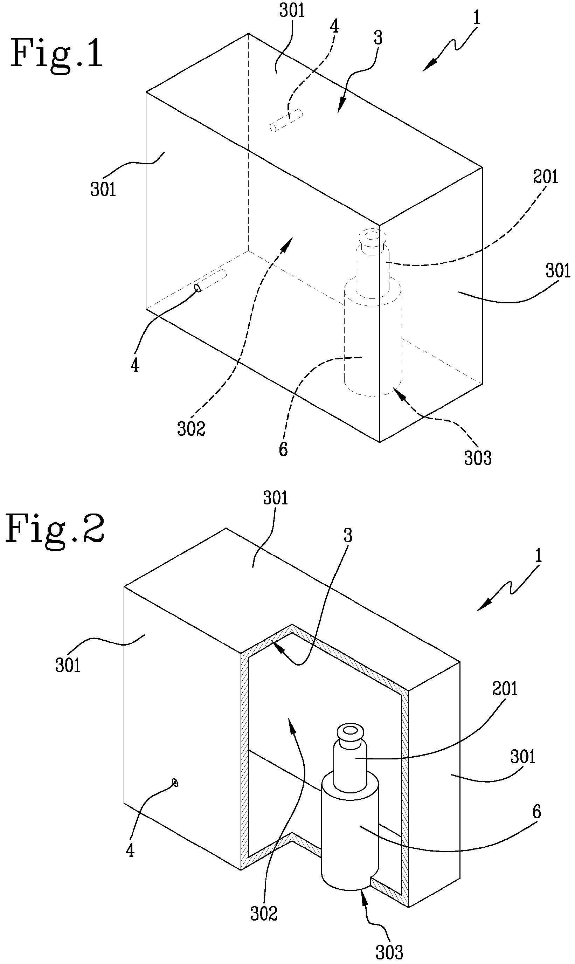

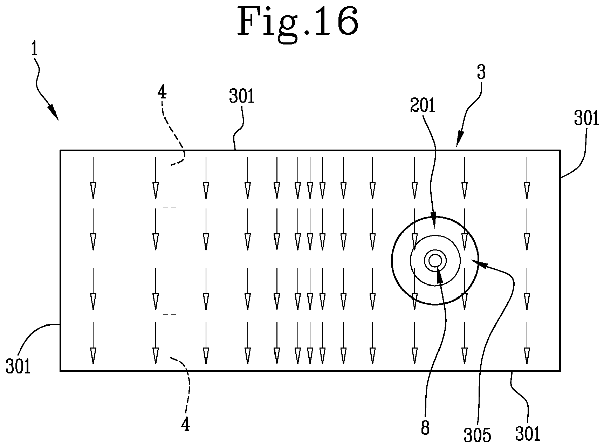

Figures 1 to 16 show an electromagnetic measuring device 1, referred to more simply hereinafter as measuring device 1, for measuring one, or more extensive properties of a product.

As indicated above, the term "extensive property" of a product is understood to mean a physical amount that depends on the dimensions or amount of material of the product. In other words, the extensive property proportionately increases or decreases to the amount of material forming the product, or to the spatial extension thereof.

By way of example, hereinafter, reference will be made to the measurement of an extensive property, such as the volume of the product, but it is to know that advantageously, without restriction to generality, the electromagnetic measuring device of the present invention can be used for measuring other extensive properties, e.g. weight.

Furthermore, by measuring one or more extensive properties of the product, it is possible to gather further product properties, such as a humidity, for example, and possibly a composition (i.e. the type of material) of the product.

The description and figures refer to a product that can be a container 201, for example, configured to contain a filling material 202 such as a flowing material of the liquid type, or in powder. Note that the container 201 is open at the top for being filled from above with the flowing material 202.

The container 201 can be a bottle, for example or a vial, which can be made of glass, or a plastic material.

The flowing material 202 of the liquid type, can be, for example, a medicine comprising an oil- or water-based emulsion.

The powder flowing material 202 can be a medicine, for example, or a commercial preparation for pharmaceutical use, e.g. a supplement. Alternatively, the powder flowing material 202 can be tobacco powder. The measuring device 1 is configured to measure one or more extensive properties of the product, both in the case of an empty container 201, and in the case of the container 201 filled with the flowing material 202. Despite showing and making reference to a product, such as a container 201, optionally filled with the flowing material 202, it is to know that the invention described herein also applies to products of another type, for which it is necessary to measure one or more extensive properties, when the products are generally made of one or more dielectric materials. Now, if we consider an automatic machine in the tobacco industry, or even in the pharmaceutical industry, not shown, comprising a transport conveyor for products, such as containers 201, and a filling station configured to fill each empty container 201 carried thereto with the flowing material 202, advantageously, the measuring device 1 of the present invention can be used in the filling station, to measure the volume of the containers 201, as well as the volume of the flowing material 202 with which the container 201 has been filled.

Note that by measuring the volume of the flowing material 202 it is possible to calculate therefrom a weight of the flowing material 202, finding out the density thereof.

The measuring device 1 comprises a body 3, which is hollow inside, provided with walls 301 made of a conductive material defining an internal cavity 302 configured to receive the product.

The measuring device 1 comprises a coupling component 4, configured to create an electromagnetic field in the internal cavity 302 and to receive said electromagnetic field disturbed by the product, when the product is present in the internal cavity 302.

Such disturbance can be measured by identifying primary properties of the resonator and from these primary properties, by means of successive processing, it is possible to determine one or more extensive properties of interest.

Note that the measuring device 1 comprises a dielectric component 5 which is provided for complete or partial filling the internal cavity 302. The dielectric component 5, made of a non-conductive material, can be in the gaseous state, i.e. air, as shown in Figures 1 to 4, and in this case, it is provided for complete filling of the internal cavity 302.

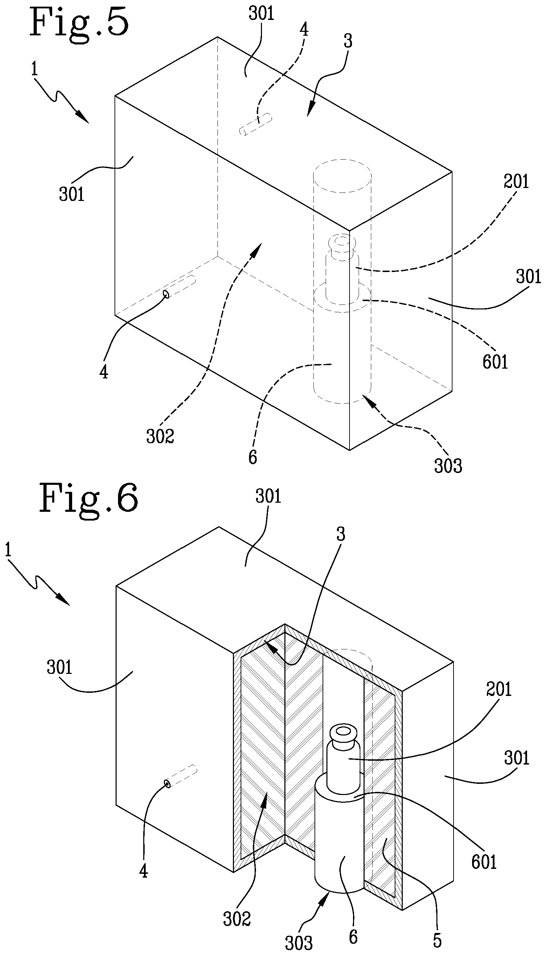

Alternatively, as shown in Figures 5 to 15, the dielectric component 5 can be made of a material in the solid state, and in this latter case, it can be provided for at least partial or complete filling of the internal cavity 302. Even if in figures 5 to 15 a dielectric component 5 is shown in the solid state having a shape capable of completely filling the internal cavity 302, it is to know that other shapes may be possible, in which the internal cavity is only partly filled with the dielectric component 5 in the solid state.

The dielectric component 5 in the solid state can be an inert material, which is accepted among those intended to come into contact with foodstuffs, e.g. a material of plastic type, or a material of ceramic type.

For example, the material of inert plastic type can be selected from the group consisting of: high-density polyethylene (abbreviated to HDPE); polystyrene (abbreviated to PS); Polytetrafluoroethylene (a polymer belonging to the class of perfluorocarbons, abbreviated to PFC, known with the commercial name of Teflon^{™}); and any combinations thereof. In fact, as the plastic materials listed above are known for not negatively influencing the consumer's health or for not influencing the quality of the products with which they may come into contact, they are particularly used for products intended for consumption.

The body 3 has a loading opening 303 made in one of the walls 301. The measuring device 1 further comprises a loading element 6 and a movement device 7, the latter being capable of moving the loading element 6 relative to the body 3.

The movement device 7 can be a pneumatic, mechanical or electronic actuation device, capable of moving the loading element 6 and connected thereto.

The movement device 7 is, in fact, configured to insert the loading element 6 into the body 3 through the loading opening 303 from an external position, configured to receive the product, to an internal position, in which the product is in the internal cavity 302 and positioned in a measuring position.

By virtue of the fact that the measuring device 1 comprises the movable loading element 6 and the movement device 7, the product is transferred from outside the measuring device 1 to the measuring position, where one or more extensive properties of interest are measured, in a simple manner and regardless of the method with which the products, in the automatic machine, are carried to the measuring device 1 by the transport conveyor. In fact, as there is no more interaction between the measuring position and the transport conveyor, it is possible to select the most suitable transport conveyor of the automatic machine, for the products to be carried, thus simplifying the structure of the transport conveyor and, consequently, of the automatic machine into which the measuring device 1 can be inserted. At the same time, the measurement of the product quality is also optimally ensured, as the product is inserted into the internal cavity 302 of the measuring device 1 and crosses the loading opening 303, being moved by the loading element 6, which is part of the measuring device 1 and ensures maximum measuring efficiency. Furthermore, the fact that each product is inserted into the measuring device 1 in isolation ensures that each measurement of the quality of the product cannot be influenced by other products adjacent thereto.

Note that the loading element 6 is shaped in such a way as to close the loading opening 303, when the loading element 6 is in the internal position. In other words, the loading opening 303 is obstructed by the loading element 6 and, by virtue thereof, only the loading element 6 and the product are allowed to access the internal cavity 302, but not any foreign particles.

Additionally, the loading element 6 comprises a supporting part 601, which is configured to receive the product resting on it and made of a dielectric material in the solid state, which can be the same material, for example, in the solid state with which the dielectric component 5 is made, if the dielectric component 5 is not air. Alternatively, the dielectric material with which the supporting part 601 is made can be specifically and independently selected with respect to the dielectric component 5.

The support part 601 at least partly delimits the internal cavity 302, when the loading element 6 is in the internal position and contributes to keep the quality factor of the measuring device 1 high.

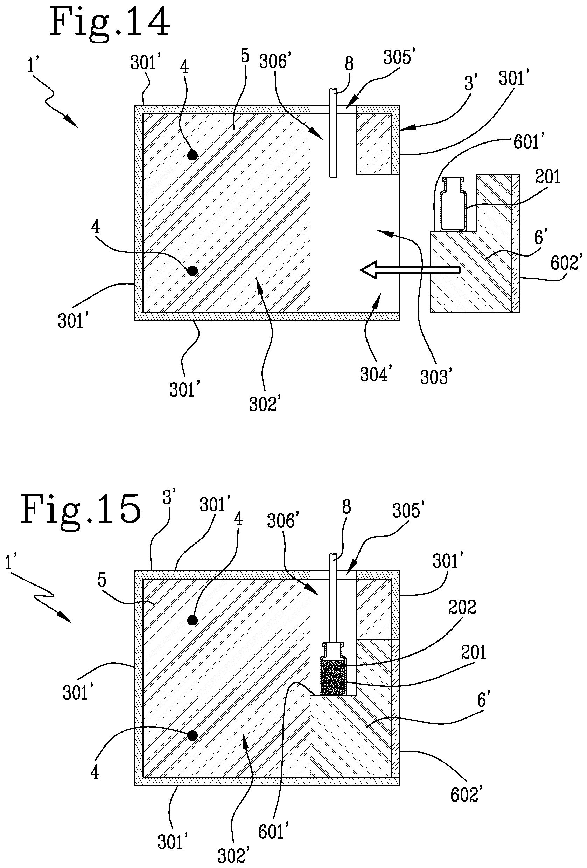

The whole loading element 6 can be made as a single component, in which the support part 601 makes a support surface, as in the Figures from 1 to 13. However, the loading element 6 can also have an external part, made with the same metal material with which the body 3 is made, similarly to what is shown in Figures 14 and 15, referring to a version 1' of the measuring device, which is different from the measuring device 1 and will be described in greater detail later on.

If present, the outer metal part of the loading element 6 allows completely containing the electromagnetic field in the body 3, and therefore, in the internal cavity 302.

This can also contribute to keep a high-quality factor of the measuring device 1, which might otherwise deteriorate, radiating the electromagnetic field outwards through the loading opening 303.

The quality factor expresses a measurement sensitivity of the measuring device 1 and, therefore, the capacity of the measuring device 1 to accurately determine the extensive properties of the products contained therein.

Remaining the quality factor of the measuring device 1 for the presence of the loading opening 303 substantially unaltered, the electromagnetic field remains exclusively disturbed by the product when the product is in the internal cavity 302.

The movement device 7 is configured to move back the loading element 6 from the internal position to the external position, so as to extract the product from the internal cavity 302 through the same loading opening 303. This allows having a single position of the loading element 6, in which the product can be received before and after measuring one or more extensive properties, and this simplifies the transfer of the product from the transport conveyor to the electromagnetic measuring device 1.

The internal cavity 302 has a loading space 304, in communication with the loading opening 303 in which the loading element 6 is movable along a loading line.

As shown in Figures 1, 2, 5 and 6, the loading opening 302 is the only opening made in the walls 301 of the body 3.

If the internal cavity 302 is at least partly filled by the dielectric component 5 in the solid state, the loading space 304 is delimited by the dielectric component 5 and defines a blind channel, as shown in Figures 5 and 6, which is open only on the side of the loading opening 303. The loading element 6 is movable in this blind channel for inserting the product into the internal cavity 302.

Note that the coupling component 4 is oriented and positioned in one of said walls 301 in such a way that the electromagnetic field created in the internal cavity 302 has an electric field distribution lying in a plane perpendicular to the loading line.

In fact, the electromagnetic measuring device 1 is preferably a microwave resonator operating at a frequency, which is greater, or equal to 1 GHz and less, or equal to 3 GHz, preferably greater, or equal to 1GHz and less, or equal to 2GHhz. In fact, the internal cavity 302 is a resonant cavity.

By virtue of the fact that the electric field distribution is perpendicular to the loading line, the field distribution is not disturbed, and it is only disturbed by the product, when the product is in the internal cavity 302. In fact, thereby, the currents flow over the walls 301 of the internal cavity 302 but not on the one in which there is the loading opening 303, and so the loading opening 303 is prevented from irradiating outwards.

Again, this contributes to keeping the quality factor of the measuring device 1 high.

Note that the electric field distribution, which is transverse to the loading line, has a maximum intensity in a position other than the measuring position.

Thanks to this, in fact, the measurement of the extensive property of the product, e.g. the volume, is less sensitive to potential errors if the loading line is displaced with respect to a nominal position.

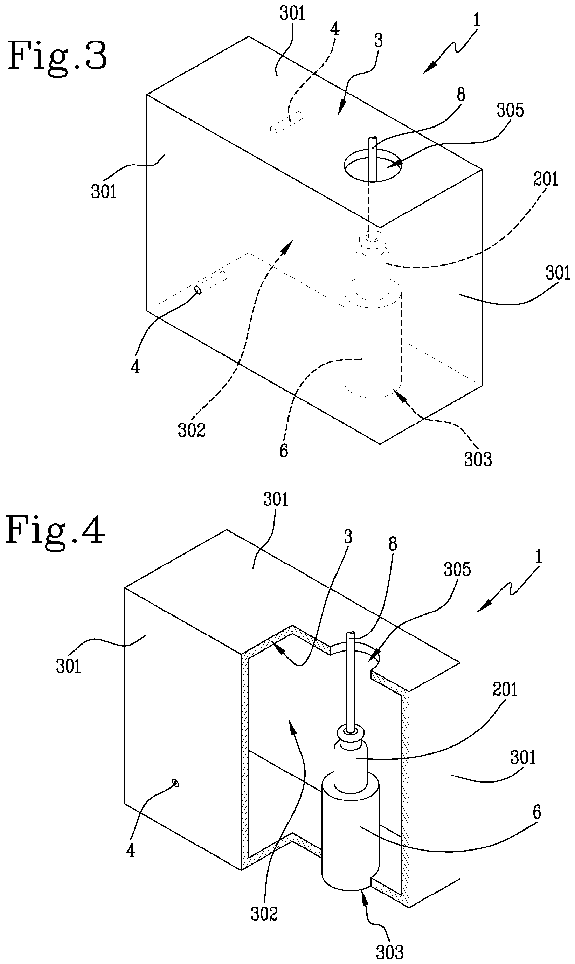

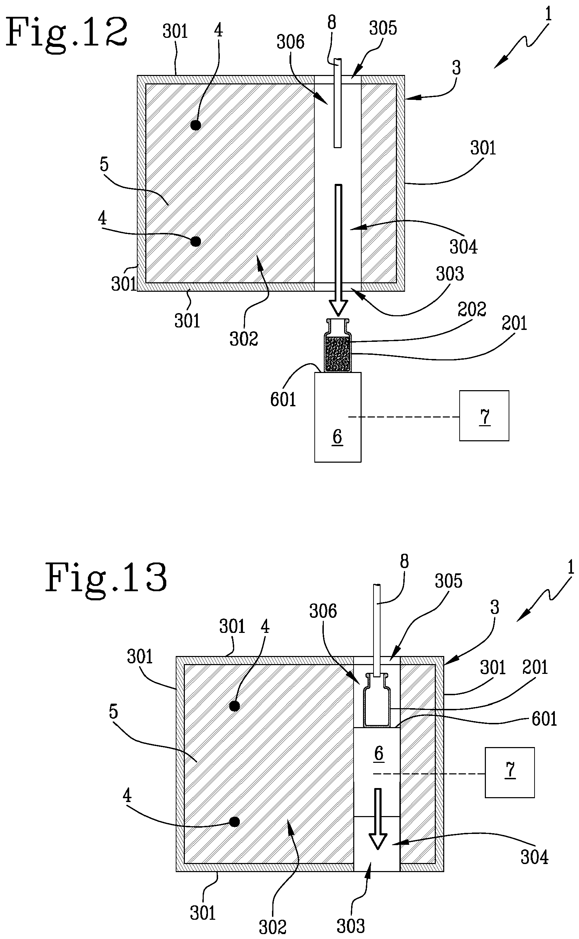

In other words, the intensity of the electric field distribution created by the coupling component 4 is maximum at a central axis of symmetry of the measuring device 1, as shown in Figure 12, but the loading opening 303 and the loading line are displaced with respect to such axis of symmetry. According to a version of the measuring device 1 shown at least in Figures 3, 4, 7 and 8, if the product is a hollow container 201 configured to contain a filling material 202 such as a flowing material, the body 3 can be provided with at least one filling opening 305, made in one of the walls 301. The filling opening 305 is distinct and different with respect to the loading opening 303.

The internal cavity 302 has a filling space 306, in communication with the filling opening 305, which is configured to receive a nozzle 8 adapted to fill the container 201 with the flowing material 202, when the loading element 6 is in the internal position and the container 201 is in the measuring position.

The nozzle 8 is comprised in the filling station of the automatic machine, although not necessarily. In fact, for particular applications, the nozzle 8 can also be part of the measuring device 1 and secured to the measuring device 1 at a given position. In this case, the filling station comprises a different device for feeding the flowing material 202 to the nozzle 8. According to a version of the measuring device 1, not shown, the loading opening 303 and the filling opening 305 coincide and there is a single opening made in the walls 301 of the body 3, through which the loading element 6 is movable in the loading line from the external position to the external position. The nozzle 8 is secured to the loading element 6 and it is integrally movable therewith, so that when the loading element 6 is in the external position and receives the container 2, the latter, in turn, receives the filling nozzle 8. For example, the external position of the loading element 6 can be positioned above the measuring device 1 in such a way that the nozzle 8 is again secured at the top relative to the container 2. By virtue of the fact that the measuring device 1 can receive the nozzle 8 and when the product is configured to be filled, it is possible to obtain an integration between the filling of the container 201 and the measurement of one or more extensive properties of the container 201 filled with the flowing material 202, or just of the flowing material 202.

In detail, a measurement of the flowing material volume 202 is possible after the filling, but also during the filling, in order to control the filling itself as it gradually takes place.

Note that, before the filling, when the empty container 201 is in the measuring position, a reference measurement is taken for subsequently obtaining the measurement of the extensive property of interest of the flowing material 202 relative to the reference measurement. In other words, the measurement of the empty container 201 is used as zeroing the measuring conditions of the measurement device 1, before the next measurement of the extensive property of the flowing material 202, e.g. the volume.

This ensures a particularly precise measurement of the extensive property of the flowing material 202, since such measurement is taken relative to a reference measurement of the same measuring device 1 and therefore, in the same measuring conditions.

In other words, the measurement of the volume of the flowing material 202 disregards both a variability of the containers 201 and a variability of the conditions external to the measuring device 1. For example, if the measuring device 1 is inserted into an operating zone of the automatic machine, the reference measurement of the empty container 201 and the extensive property of the filled container 201 are influenced in the same way by the temperature of the operating zone, and therefore, the temperature is irrelevant for the volume of the flowing material 202 obtained relative to the reference measurement.

Furthermore, advantageously, the dwell time of the container 201 for the filling function is optimized, because during the stop the measurement of one or more extensive properties is also taken.

The measuring device 1 defines a single compact station, with minimum dimensions. In fact, the size of the measuring device 1 is only determined by the size of the container 201, which must be received in the internal cavity 302 and, thus, the measuring device 1 can have reduced dimensions.

In addition, the cycle time of the automatic machine, into which the measuring device 1 is insertable, can also be accelerated without needing a filling station and a measuring station, different to each other, along the transport path of the containers 201.

The measuring device 1 can comprise a control element, not shown, configured to be in communication with a respective control unit of the automatic machine, or of the filling station, the control element being suitable for exchanging data relative to one or more extensive properties of the product (if the measuring device 1 comprises only the loading opening 303, it is configured to measure the extensive property of the product), and/or of the container 201, when the container 201 has been filled with the flowing material 202 (if the measuring device 1 comprises the loading opening 303 and the filling opening 305 and if, additionally, the measuring device 1 is configured to measure the extensive property of the flowing material 202).

In this last case, the automatic machine, or the filling station, can command an interruption of the filling of the container 201, if the volume of the container 201 is equal to a predetermined volume since the measurement of the volume of the container 201 can also be taken during the filling. Note that if the internal cavity 302 is at least partly filled by the dielectric component 5 in the solid state, as in Figures 5 to 15, both the loading space 304 and the filling space 306 are delimited by the dielectric component 5. Thereby, the loading space 304 and the filling space 306 define a channel, which is open on two sides, extending from the loading opening 303 to the filling opening 305. The measuring position is positioned in the channel between the loading space 304 and the filling space 306 and it is connected to both.

As shown in figures 5 to 13, the channel can extend along a single longitudinal axis. The loading opening 303 and the filling opening 305 can be opposite each other and, in this case, the loading space 304, the filling space 306 and the measuring position can be aligned.

The channel can be shaped, for example, as a cylindrical channel, obtained in the dielectric component 5, extending from the loading opening 303 to the filling opening 305, and in which a first part is given by the loading space 304 and a second part is given by the filling space 306. It is to know that although the channel has been depicted as having one same section, both in the loading space 304 and in the filling space 306, this is clearly not necessary because the loading space 304 must have a cross-section shaped in such a way as to accommodate the container 2, while the filling space 306 can have a different cross-section shaped to receive the filling nozzle 8 that usually has a reduced cross-section.

Therefore, the channel can be made simply and cheaply inside the dielectric component 5.

As shown in the accompanying figures, if the body 3 has the shape of a parallelepiped, the filling opening 303 and the loading opening 305 are made in opposite walls 301 of the body 3.

Again, this makes the measuring device 1 very cheap and easy to make, especially considering the fact that the body 3 can be made by joining two shells (not shown).

Preferably, the loading line is perpendicular to the wall 301 in which the loading opening 303 is made, to ensure the perpendicularity of the electric field distribution relative to the loading line.

The coupling component 4 comprises at least one emission source and a reception source.

The emission and reception sources can be positioned in opposite walls 301 of the body 3, which are different to the walls 301 in which the loading opening 303 and/or the filling opening 305 are present.

Considering the parallelepiped shape of the body 3 and if we consider that the loading opening 303 and/or the filling opening 305 are positioned in head walls of the body 3, the sources of emission and reception are secured to respective greater side walls of the body 3, which are mutually opposite and extend linearly, perpendicularly to the same greater side walls and parallel to smaller side walls of the body 3.

Thereby, if the loading line is perpendicular to the head wall on which the loading opening 303 lies, the aforesaid perpendicularity between the loading line and the electric field distribution is ensured.

Alternatively, according to a variant not shown, the emission and reception sources can be secured also in the same wall 301.

According to a further variant, not shown, if the electromagnetic measuring device has reflection, the coupling component 4 can comprise a single emission and reception source.

However, the above remains valid with respect to the perpendicularity of the electric field distribution with respect to the loading line and the securing of the only emission and reception source to one of the greater side walls.

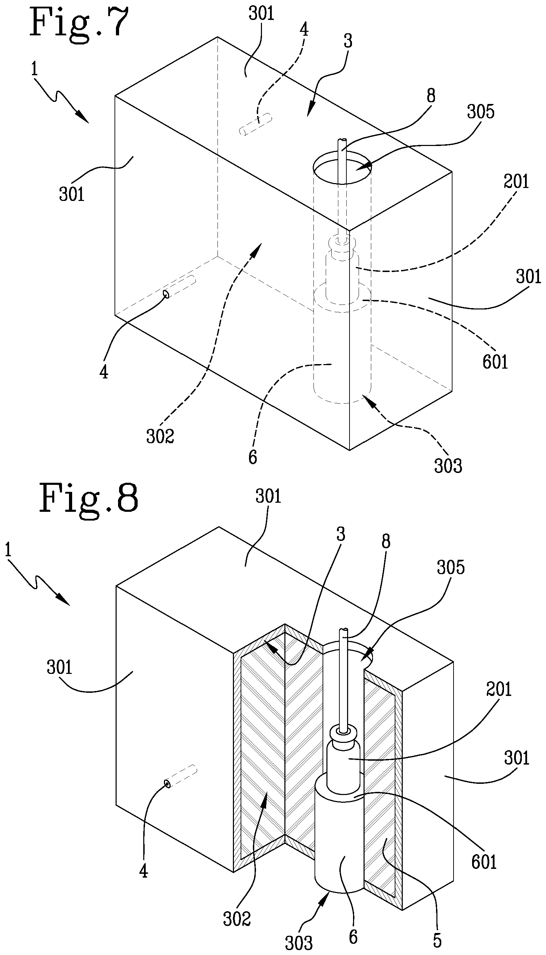

According to the version of the measuring device shown in Figures 1 to 13, the channel has a vertical axis. In other words, the loading line is vertical. Thus, initially, the movement device 7 is configured to insert the loading element 6 into the body 3 through the loading opening 303 lifting the loading element 6 (Figure 5) vertically from the external position, in which the container 2 is received below the loading opening 303, to the internal position, in which the container 201 is in the measuring position. Then, the movement device 7 is configured to lower the loading element 6 (Figure 8) from the internal position to the external position, in such a way as to extract the container from the internal cavity 302 through the same loading opening 303.

It is to highlight that the channel does not need to be vertical. In fact, the loading opening 303 and/or the filling opening 305 can be opposite and counter-facing, for example, in the case of an oblique channel in the body 3 of the measuring device 1. However, the fact that the loading element 6 can slide in a rectilinear manner between a lower external position and an upper internal position, makes it possible to position the electromagnetic measuring device 1 above the transport conveyor and transfer the product of interest into the measuring position in a simple manner.

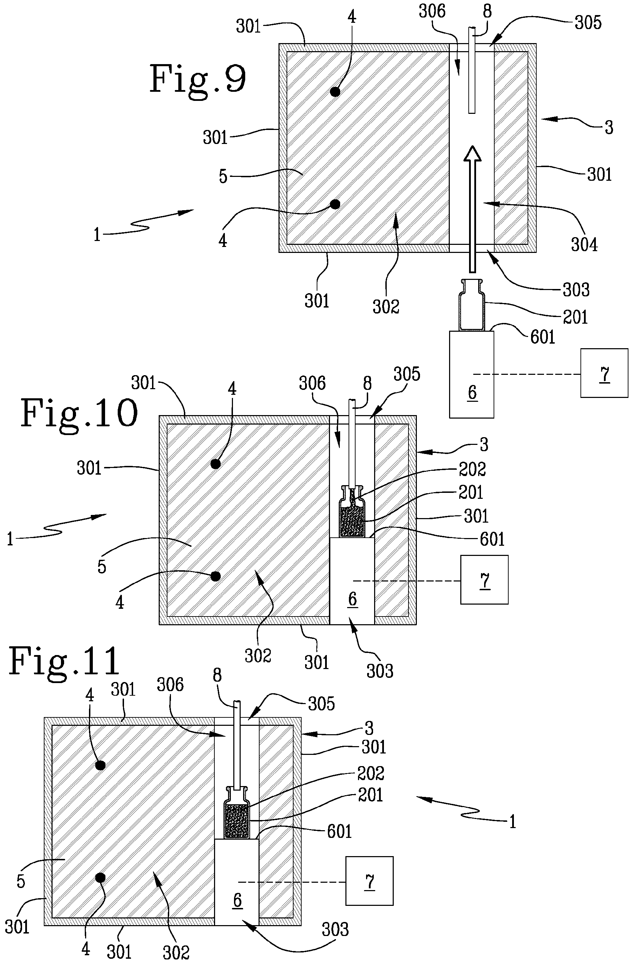

The fact that the channel can be vertical also applies to the blind channel. However, in the presence of the filling opening 305, when the loading element 6 is in the internal position and the container 201 is in the measuring position, as in Figure 10, the nozzle 8 can already be accommodated inside the container 201 and thus, the container 201 can be ready for filling.

According to a variant shown in Figure 13, an inserting position can be provided, in which a coupling is provided between the container 201 and the nozzle 8, in the sense that the container 201 receives the nozzle therein. In this case, the movement device 7 is configured to move the loading element 6 from the external position in Figure 9 to the inserting position in Figure 13.

The internal position is interposed between the inserting position and the external position and, therefore, after the coupling with the nozzle, the movement device 7 is configured to further move the loading element 6 from the inserting position to the internal position, in Figure 10, so as to bring the container 201 into the measuring position, in which it can also be filled. Considering the vertical axis of the channel as depicted in Figure 13, the movement device 7 can move the loading element 6, lifting it vertically between the external position, in which the container 201 is received below with respect to the loading opening 303 and the inserting position, then lowering it from the inserting position to the internal position, after the nozzle 8 has been inserted into the container 201. Optionally, the nozzle 8 can also be lowered integrally with the container 201, when the loading element 6 is moved from the inserting position to the internal position. Note that optionally, the nozzle 8 can move back during the filling of the flowing material 202 in the sense that it can move away from a bottom of the container 201 as the container 201 is gradually filled. In fact, if the nozzle 8 remains as close as possible to an upper surface of the flowing material 202 during the filling, disturbances in the flowing material 202 itself can be avoided, especially for liquid materials.

The fact that the electric field distribution is perpendicular to the loading line still remains valid and it now also coincides with a filling direction of the filling space 306, in which the nozzle 8 is accommodated. The currents do not flow over the walls in which there are the loading opening 303 and the filling opening 305, which thus do not irradiate outwards. Advantageously, the nozzle 8 can also be chosen in metal, as the electric field is not disturbed by the presence of the nozzle 8.

Also note that the axis of the channel defined by the loading space 304 and by the measuring space 306 is displaced with respect to the central axis of symmetry of the measuring device 1, in which the electric field distribution has a maximum intensity so that the measuring position does not coincide with the maximum axis of the electric field, as stated above. Figures 14 and 15 show a measuring device 1' that differs from the measuring device 1 in that there is a loading space 304' and a filling space 306', delimited by the dielectric component 5 in the solid state, defining a channel open on two sides that extends from a loading opening 303' to a filling opening 305', as detailed above. However, the loading space 304' and the filling space 306' extend along respective axes, which are different from each other and define respective stretches of the channel, which converge in the measuring position.

In fact, if we consider an axis of the loading line of the loading space 304'and an axis of the loading space 306', they are perpendicular and mutually converging. If the measuring device 1' has a body 3' shaped like a parallelepiped, the filling opening 304' and the loading opening 306' are made in walls 301' of the body 3', which are adjacent to each other. Therefore, the movement device 7 is configured to move a loading element 6' horizontally between the external position and the internal position so that, when the loading element is in the external position, it is positioned laterally to the body 3' (Figure 14).

In this case, the coupling component 4 is oriented and secured to the walls 301 to create an electromagnetic field having an electric field distribution lying in a plane perpendicular to a longitudinal axis of the filling space 306', to ensure that the electric field is not disturbed by the presence of the nozzle 8.

Therefore, it still remains valid that when the container 201 is in the measuring position and the loading element 6' is in the internal position, the electric field is only disturbed by the container 201 resting on the loading element 6'.

Note that the loading element 6' comprises a supporting part 601', configured to receive the product resting on it and made of the dielectric material in the solid state for internally delimiting an internal cavity 302', and an external part 602', made of the same metal material as the body 3. In fact, the external part 602' is aligned or flush with the wall 301' in which the dispensing opening 303' of the body 3' is made, when the loading element 6' is in the internal position.

Besides all the previously shown advantages, which still remain valid here, by virtue of this variant, it is possible to obtain a measuring device 1 with a horizontal loading line, if needed for the automatic machine into which the measuring device 1 is inserted.

Irrespective of the loading line and the shape of the channel delimited by the dielectric component 5 in the solid state, considering the compact size and minimum volume of the measuring device 1, it is highlighted that the automatic machine can comprise a plurality of electromagnetic measuring devices 1, each configured to measure one or more extensive properties of respective products, in such a way as to simultaneously perform a plurality of parallel measurements.

Furthermore, the automatic machine can also comprise a cleaning jet, not shown, for blowing pressurized air into the channel and expelling any foreign particles in the channel.

In use, a method is provided for measuring one or more extensive properties of a product, comprising the preparing an electromagnetic measuring device 1 or 1', as described above. The method further comprises the steps of
- receiving the product on the loading element 6 or 6' when the loading element 6 or 6' is in the external position;
- inserting the loading element 6 or 6' into the body 3 or 3' through the loading opening 303 or 303' by moving it from the external position to the internal position, to position the product in the internal cavity 302, 302' in the measuring position;
- creating an electromagnetic field in the internal cavity 302 or 302' and receiving said electromagnetic field disturbed by the product present in the internal cavity 302 or 302' to measure the above-mentioned one or more extensive properties of the product.

By virtue of such measuring method, as already said above, independence between the measuring of the extensive properties of the product and the method with which the product is transferred to the loading element 6 or 6' is ensured, since the insertion of the product into the internal cavity 302 or 302' is part of the same measuring method.

This allows both an optimal measurement of the extensive properties and a simplification of the transport method for the products in the automatic machine.

The method further comprises the step of moving back the loading element 6 or 6' from the internal position to the external position, so as to extract the product through the same loading opening 303 or 303'.

By virtue of this step of moving back, after measuring the extensive property, the product is brought back into the same initial position, so it has a single position both for receiving the product in the loading element 6, or 6', and for the release thereof to the transport conveyor of the automatic machine.

If there is provided the step of preparing a hollow container 201, as a product, configured to contain flowing material 202, the method provides having a step of inserting into the internal cavity 302, or 302' the loading element 6, or 6', followed by a step of filling the container 201 with the flowing material 202. Such filling step provides that a filling nozzle 8, belonging to the automatic machine, is received in a filling space 306 or 306' of the internal cavity 302 or 302'.

The filling step can take place when the nozzle 8 is correctly inserted into the container 201.

The step of preparing the measuring device 1 can comprise a step of vertically positioning a longitudinal axis of a channel, defined between the loading space 303 and the filling space 305, and delimited by the dielectric component 5 in the solid state. In this case, the step of inserting the loading element 6 inside body 3 through the loading opening 303 takes place by lifting the loading element 6 from the external position placed below the loading opening 303.

In this case, for further improving a step of coupling the container 201 to the nozzle 8, optionally, a vertical lifting step may be provided for vertically lifting the loading element 6, after receiving the container 201 in the external position, to an inserting position, for inserting the nozzle 8 into the container 201. The method can also have a step of lowering the loading element 6 from the inserting position to the internal position, before the container 201 filling step.

In other words, the container 201 can be lifted until it receives a portion of nozzle 8, which is greater than that needed to allow the filling, and then it can be lowered to the measuring position.

Alternatively, the step of simultaneously and integrally lowering the container 201 and the nozzle 8 can be provided, until the container 201 is in the measuring position.

Advantageously, the method provides obtaining a reference measurement when the empty container 201 is in the measuring position, so as to subsequently obtain the current measurement of the extensive property of the flowing material 202 with respect to that reference measurement. This allows zeroing the measuring conditions of the measuring device 1 or 1', using, as reference measurement, that of the empty container 201 before measuring the extensive property of the flowing material 202 during, and after the filling.

In other words, the measurement of the empty container 201 is used as zeroing the measuring conditions of the measuring device 1, 1' before the following measurement of the extensive property of the flowing material 202, e.g. the volume.

Thereby, it is possible to determine the extensive property exclusively associable with the flowing material 202. For example, the volume of the flowing material 202 can be accurately determined, as it disregards the variability of the volume of the containers 201 and it also disregards the measuring conditions external to the measuring device 1, which could influence the measuring precision in the measuring device 1, 1'.

A step of measuring the extensive property of the flowing material 202 may be provided at the end of the filling. However, optionally, the method may also provide a further step of measuring the extensive property of the flowing material 202, during the filling. In fact, a step of exchanging data relative to such extensive property may be present with an automatic machine into which the measuring device 1 or 1', is inserted.

Such step of data exchange may provide a communication step between a control element for controlling the measuring device 1 and a respective control unit of the automatic machine, or of the filling station, to exchange data relative to the one or more extensive properties of the product measured and/or the extensive properties of the container 201, empty and/or filled with the flowing material 202, in order to control the filling of the container 201 with the flowing material 202 based on the measurement of the extensive property of the flowing material 202 measured by the measuring device 1 or 1'.

This allows the automatic machine to interrupt the filling of the container 201 if the extensive property of the flowing material 202 measured is equal to a predetermined value.

For example, the automatic machine, or the filling station, is capable of interrupting the filling of the container 201 on reaching a predetermined volume for the flowing material 202.

The measuring method further comprises the step of orienting the electric field distribution in the internal cavity 302 so that it lies in a plane perpendicular to a longitudinal axis of the loading space 304, if the filling opening 305 is absent, or if the filling opening 305 is present and the loading space 304 and the filling space 306 are aligned and identify a channel, e.g. delimited by the dielectric component 5 in the solid state. This allows making the measurement of the extensive properties of the container 201 irrelevant with respect to the displacement of the container 201 with respect to a nominal measuring position, and/or irrelevant with respect to the nozzle 8, which can thus be made of a metal material, when the nozzle 8 is inserted into the filling space 306.

Whereas, if the loading space 304' and the filling space 306' are mutually incident, the measuring method comprises the step of orienting the electric field distribution in the internal cavity 302' so that it lies in a plane perpendicular to a longitudinal axis of the filling space 306'.

Likewise, by virtue of this, the measurement of one or more extensive properties of the product is irrelevant with respect to the nozzle 8, which may, therefore, also be made of a metal material, when the nozzle is inserted in the filling space 306'.

The measuring method also comprises the step of orienting the electric field distribution in the internal cavity 302 or 302', in such a way as to have a maximum intensity in a position other than the measuring position, in order to make the measuring method less sensitive to errors, should the loading line be displaced with respect to a nominal position.

## Claims

1. Electromagnetic measuring device (1; 1') for measuring one or more extensive properties of a product (201, 202) comprising
- a body (3; 3') which is hollow inside, provided with walls (301; 301 ') made of a conductive material defining an internal cavity (302; 302') configured to receive the product (201, 202);
- a coupling component (4), configured to create an electromagnetic field in the internal cavity (302; 302') and to receive said electromagnetic field disturbed by the product (201 , 202) present in the internal cavity (302; 302'); wherein
- the body (3; 3') has a loading opening (303; 303') made in one of said walls (301; 301'); and wherein the measuring device (1; 1') also comprises
- a loading element (6; 6') and a movement device (7), wherein the movement device (7) is capable of moving the loading element (6; 6') relative to the body (3; 3') and is configured to insert the loading element (6; 6') into the body (3; 3') through said loading opening (303; 303') from an external position, configured to receive the product (201, 202), to an internal position, in which the product (201, 202) is in the internal cavity (302; 302') and is positioned in a measuring position.

2. Electromagnetic measuring device (1; 1'), according to claim 1, wherein the loading element (6; 6') is shaped in such a way as to close the loading opening (303; 303'), when the loading element (6; 6') is in the internal position, and comprises a supporting part (601; 601'), made of a dielectric material, which is configured to receive the product (201, 202) resting on it and at least partly delimits the internal cavity (302, 302'), when the loading element (6; 6') is in the internal position.

3. The electromagnetic measuring device (1; 1'), according to claim 1, or 2, wherein the movement device (7) is configured to move back the loading element (6; 6') from the internal position to the external position, so as to extract the product (202, 202) through the same loading opening (303; 303').

4. Electromagnetic measuring device (1; 1') according to one of the preceding claims, wherein the internal cavity (302; 302') has a loading space (304; 304'), in communication with the loading opening (303; 303'), the loading element (6; 6') being movable in the loading space (304; 304'); and wherein the measuring device (1) comprises a dielectric component (5) made of a material in the solid state, which at least partly fills the internal cavity (302; 302'), the loading space (304) being delimited by the dielectric component (5).

5. Electromagnetic measuring device (1; 1') according to one of claims 1 to 3, wherein the product (201, 202) is a hollow container (201) configured to contain flowing material (202) and wherein the internal cavity (302; 302') has a loading space (304; 304'), in communication with the loading opening (303; 303'), the loading element (6; 6') being movable in the loading space (304; 304'); the body (3; 3') being provided with at least one filling opening (305; 305') made in one of the walls (301; 301') and the internal cavity (302; 302') having a filling space (306; 306'), in communication with the filling opening (305; 305'); the filling space (306; 306') being configured to receive a nozzle (8) suitable for filling the container (201) with the flowing material (202), when the loading element (6; 6') is in the internal position and the container (201) is in the measuring position.

6. Electromagnetic measuring device (1; 1') according to claim 5, when it is dependent on claim 4, wherein the filling space (306) is delimited by the dielectric component (5).

7. Electromagnetic measuring device (1; 1 ') according to claim 6, wherein the loading space (304; 304') and the filling space (306; 306') define a channel open on two sides which extends from the loading opening (303; 303') to the filling opening (305; 305'); the measuring position being positioned in the channel between the loading space (304; 304') and the filling space (306; 306') and being connected to both.

8. Electromagnetic measuring device (1) according to claim 7, wherein the loading opening (303) and the filling opening (305) are opposite each other and the channel extends along a single longitudinal axis; the loading space (304), the filling space (306) and the measuring position extending along the same longitudinal axis of the channel and being aligned with each other; and wherein the body (3) has the shape of a parallelepiped, the loading opening (303) and the filling opening (305) being made in opposite walls (301) of the body (3).

9. Electromagnetic measuring device (1) according to claim 8, wherein the axis of the channel is vertical; the movement device (7) being configured to lift the loading element (6) vertically between the external position, in which the container (201) is received below the loading opening (303), and the internal position; or wherein the movement device (7) is configured to lift the loading element (6) vertically between the external position, in which the container (201) is received below the loading opening (303), and an inserting position, configured to allow the nozzle (8) to be inserted into the container (201) and then to lower the loading element (6) from the inserting position to the internal position.

10. Electromagnetic measuring device (1) according to one of the preceding claims, wherein the internal cavity (302) has a loading space (304), in communication with the loading opening (303), the loading element (6) being movable in the loading space (304) along a loading line; the coupling component (4) being oriented and positioned in one of said walls (301) in such a way that the electromagnetic field created in the internal cavity (302) has an electric field distribution lying in a plane perpendicular to the loading line.

11. Electromagnetic measuring device (1') according to claim 7, wherein the loading space (304') and the filling space (306') extend along respective axes which are different from each other and define respective stretches of the channel which converge in the measuring position, said axes of the loading space and of the filling space converging with each other and being perpendicular to each other; and wherein the body (3') has the shape of a parallelepiped, the loading opening (303') and the filling opening (305') being made in adjacent walls (301') of the body (3').

12. Electromagnetic measuring device (1') according to claim 11, wherein the coupling component (4) is oriented and positioned in one of said walls (301') to create an electromagnetic field having an electric field distribution lying in a plane perpendicular to a longitudinal axis of the filling space (306').

13. Electromagnetic measuring device (1; 1') according to one of the preceding claims, wherein the coupling component (4) is oriented and positioned in one of said walls (301; 301') to create an electromagnetic field having an electric field distribution having a maximum intensity in a position other than the measuring position.

14. Method for measuring one or more extensive properties of a product comprising preparing an electromagnetic measuring device (1; 1') in accordance with one or more of the preceding claims and also comprising the steps of
- receiving the product (201, 202) on the loading element (6; 6'), when the loading element (6; 6') is in the external position;
- inserting the loading element (6; 6') into the body (3; 3') through the loading opening (303; 303') by moving it from the external position to the internal position, to position the product (201, 202) in the internal cavity (302; 302') in the measuring position;
- creating an electromagnetic field in the internal cavity (302; 302') and receiving said electromagnetic field disturbed by the product (201, 202) present in the internal cavity (302; 302') to measure the above-mentioned one or more extensive properties of the product (201, 202).

15. Measuring method according to claim 14 and comprising the step of moving back the loading element (6; 6') from the internal position to the external position so as to extract the product (201, 202) through the same loading opening (303; 303').

16. Measuring method according to one of claims 14 or 15, and comprising a step of preparing, as the product (201, 202) a hollow container (201) configured to contain flowing material (202), and a further step of filling the container (201) with the flowing material (202), by means of a nozzle (8) received in a filling space (306; 306') of the internal cavity (302; 302'), wherein the filling step comes after the step of inserting the loading element (6; 6') into the internal cavity (302; 302').

17. Measuring method according to claim 16, and comprising a step of positioning the loading element (6) below the loading opening (303); and wherein the method comprises a step of lifting the loading element (6) vertically between the external position and the internal position, or optionally a step of lifting from the external position to an inserting position, to allow the nozzle (8) to be inserted into the container (201) and then a step of lowering the loading element (6) from the inserting position to the internal position.

18. Measuring method according to claim 16, or 17, wherein the method comprises a step of obtaining a reference measurement, when the empty container (201) is in the measuring position, in such a way as to subsequently obtain a measurement of the extensive property of the flowing material (202) relative to that reference measurement so as to zero the measuring conditions of the measuring device (1; 1') using the reference measurement.

19. Measuring method according to one of the preceding claims 16 to 18, and comprising a step of measuring the extensive property of the flowing material (202) at the end of the filling and wherein optionally the method comprises another step of measuring the extensive property of the flowing material (202) during the filling and of exchanging data about that extensive property with an automatic machine into which the measuring device (1; 1') is inserted; to allow the automatic machine to interrupt filling of the container (201) if the extensive property of the flowing material (202) measured is equal to a predetermined value.

20. Measuring method according to one of claims 14 to 19, and comprising the step of orienting an electric field distribution in such a way that it lies in a plane perpendicular to a longitudinal axis of a loading space (303) of the internal cavity (302) in which the loading element (6) moves.

21. Measuring method according to one of claims 14 to 20, and comprising the step of orienting an electric field distribution in the internal cavity (302; 302') in such a way that it has a maximum intensity in a position other than the measuring position.
